# EUROPEAN PATENT APPLICATION

(11) **EP 0 540 885 A1**
(43) Date of publication of application: **12.05.1993**
(21) Application number: 92117065.0
(22) Date of filing: 06.10.1992
(51) Int. Cl.: H04N 7/087

(54) **Rapid identification of teletext pages**

(30) Priority: 22.10.1991 FI 914979
(71) Applicant: SALORA OY, SF-241 01 Salo (FI)
(72) Inventor: Lönnqvist, Timo, SF-24260 Salo (FI)
(74) Representative: Neumann, Ernst Dieter, Dipl.-Ing.

(57) **Abstract**

The object of the invention is a device, which rapidly identifies the pages included in teletext service. One of the page memories is reserved for a table, in which the decoder writes down the pages included in the teletext service in question. The user is also able to store for each program so called favorite pages, which the text decoder receives and from which it generates a list of topics.

## Description

The object of the invention is a device which rapidly identifies the pages included in teletext service. The invention relates to information systems and their implementation in the teletext service.

The popularity of teletext is reduced by inconvenient operation and a slow page search. In order to select a page it was necessary to remember a number of three figures, which then were entered with the number keys of a remote control. In a typical teletext service the page is sent once every 15...30 seconds, so that on the average the waiting time is half of the transmission cycle, and in the worst case the whole cycle.

The page selection can be facilitated with PAGE+ and PAGE-commands. The average waiting time could be lowered with parallel search circuits in the text decoder and with a large memory, in which the decoder stores consecutive pages to be ready for use. In circuit solutions which are economically reasonable these methods do not work anymore if the transmission does not contain all consecutive pages. In this context a text decoder refers to the combination of required integrated circuits and control programs.

Two competing transmission systems, Fastext and TOP are used to facilitate the use of teletext.

In the Fastext system information about maximum six pages is sent on a so called ghost row, in addition to a standard page. Of these six pages the topics of four pages can be told in a red, a yellow, a green and a blue box on an extra row of text, which the dispatcher of the text service generates.

In the Fastext system the text decoder automatically searches the respective pages and the user, on the basis of the topic of the page, selects a page with a correspondingly colored button in the remote control, without having to know the page numbers. The pages form a hierarchic tree structure which the user must follow. The sixth link and the INDEX command are reserved as a return path to earlier levels.

In the Fastext system the user at any one moment sees only a small fraction of the topics, and often the path to a desired page is long. Further the user will be at the mercy of the dispatcher, and is forced to view certain pages. At the transmitting end the maintenance of the links causes extra work, and the transmission of extra rows slows down the transmission of pages.

In spite of its name the Fastext system is slow, because certain link pages are found only when the page in question is received. If several levels are searched to be in readiness the need for page memory increases exponentially and also the software size expands dramatically. The storing of extra rows reduces the number of text pages that will fit into the memory.

Prior art and the present invention are described below with reference to the enclosed figures, in which:
- figure 1: shows the operating principle of the known Top-system;
- figure 2: shows the code table of source codes for the basic table of the Top-system; and
- figure 3: shows the "Header packet" message on row 0.

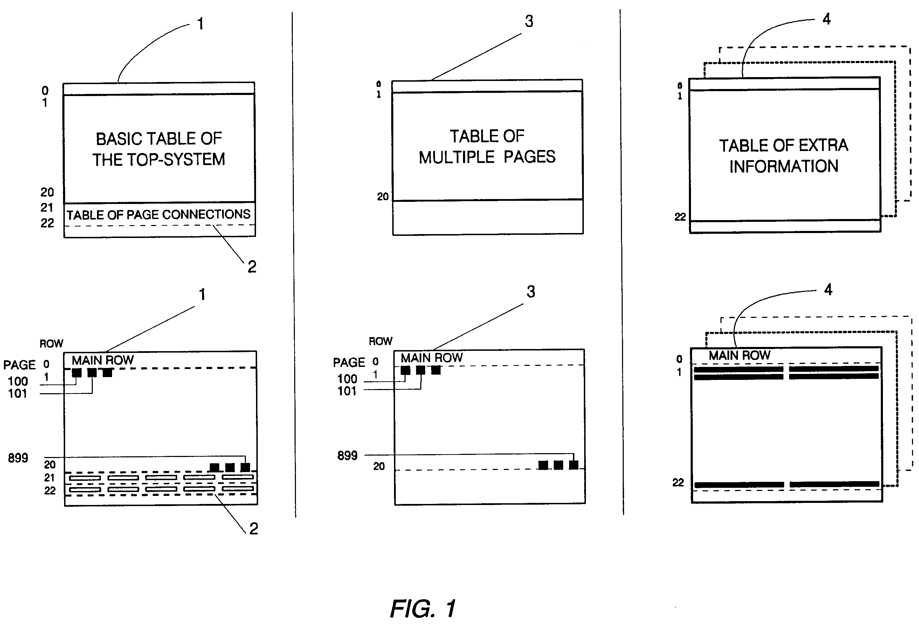

Figure 1 shows the operating principle of the Top-system. The Top-system (Table Of Pages) stores tables of the pages used by the teletext. The Top-system comprises in its maximum configuration one basic Top-system table 1, one multi-page table 3 and nine tables 4 for extra information.

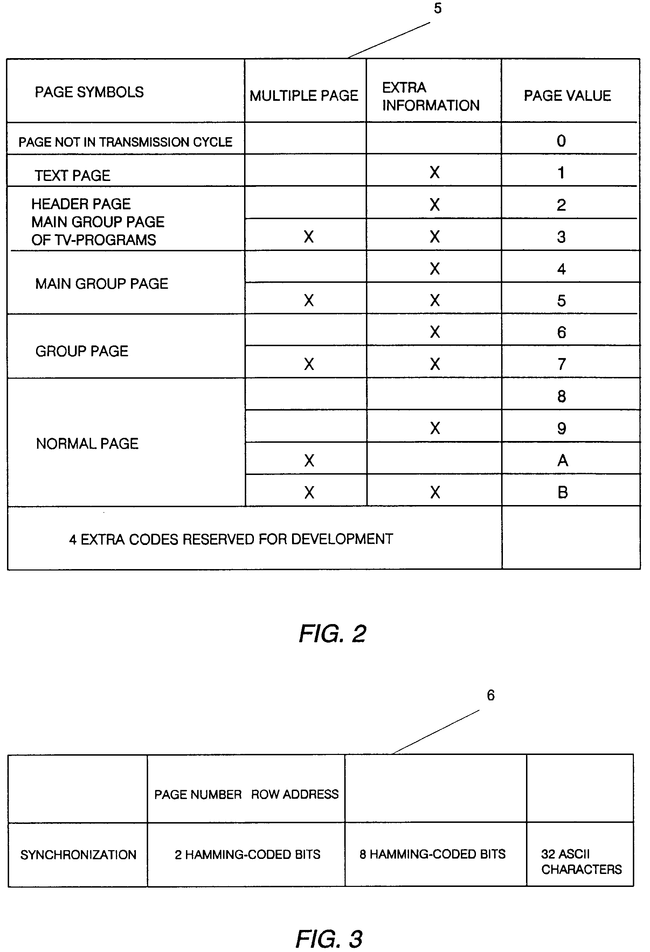

The Top-system transmits (on page number 1F0) a special basic table page 1, where each page 100...899 is represented by a defined marking location (8 bit). In table 1 a "page" can have the values "not in transmission", "standard page", "block-page" or "group-page", and the corresponding alternatives for a "rotating" multiple page. The values are shown in figure 2. For the multiple pages there is also sent a similar table of multiple pages 3, where the "value" of a page is the number of sub-pages. A text describing the topic is connected with all "block-pages" and "group-pages". These texts are transmitted on pages for the so called extra information 4. The 1F0 basic table page 1 has also a table of page connections 2, containing information about on which page the table of multiple pages 3 and the pages of extra information 4 are sent, so that the text decoder first must receive the page 1F0, and only then can it find the other "TOP-pages". The decoder uses the information on the "TOP-pages" when it fetches the "next pages" into its memory and when it generates the "page selection displays".

Figure 2 shows how the values of the elements in the basic table of the Top-system are formed in accordance with the nature of the contents of the page in question.

Figure 3 shows the "Header packet" message 6 on the Header-row. After synchronization the "Header packet" message 6 is formed by the received two byte Hamming-coded "magazine and packet address" part ("magazine" is the hundreds figure of the page, "packet address" is the running number of the row, which for the "header" is always 0), by eight Hamming-coded bytes (the page number and the sub-page numbers of the transmitted page plus some control bits), and by 32 ASCII characters (typically the name of the teletext service, the page number in question, the date, and always the time of the day in the last 8 characters).

The user has two possibilities to select a page:
- The decoder generates an extra text row containing in colored "boxes" the topic texts of the previous and the next pages, and the topic texts of the next "group-page" and "block-page". The page is selected with a button with the corresponding color.
- The decoder generates a list of the topic texts of all "block-pages" and "group-pages", from which the user selects a page by moving the cursor to a topic to his liking.

There is a disadvantage in that the dispatcher must maintain a corresponding table, which then often will contain errors. The transmission cycle of the text pages will also be slightly longer, because it will contain 3...11 extra pages. Reception of the "TOP-pages" occupies the "page search circuits" and in many applications the use of teletext is then prevented ("waiting for TOP").

An advantage compared to Fastext is that the user can be presented with an overall view of the text service. The text decoder further at all times knows the transmitted pages, so that "probable pages" in advance can be effectively fetched to the decoder memory.

World System Teletext Specification defines also the so called "Magazine Inventory Page". This table presents information about what pages and of which kind are transmitted on the respective hundreds. Thus it corresponds to the basic table in TOP, but the format is different. Probably this will be used with Fastext, but it does not remove the slowness of Fastext and being "at the mercy" of the dispatcher.

The objective of the invention was to find a solution, with which teletext would be easier and faster. Thus the object of the present invention is to provide a device which rapidly identifies the pages included in the teletext service. To achieve this the invention is characterized in that one of the page memories is reserved for a table, in which the decoder writes down the pages included in the teletext service in question.

The device according to the invention has a text decoder and a memory, in which several text pages can be stored.

In the invention one of the page memories is reserved for a table, in which the decoder writes down the pages incorporated in the teletext service in question. This table has a similar form as the basic table 1 of the above mentioned Top-system, for the handling of which all routines already exists.

A page is interpreted as being included in the transmission if there is received a "header packet" message according to figure 3, which contains the page number in question. Because it is not possible to transmit a teletext page intended for viewing without this so called Header row, it is possible to find all transmitted pages in one complete transmission cycle.

The device according to the invention first initializes all elements in the table with the value "page not in transmission", and then searches the "row 0 packet" messages which it receives. When the decoder finds a new "Header packet" message it marks the respective page in the table with the value "standard page". Page jumping works well, already with only this information available.

Because the pages of a transmission generally are grouped in certain ways, a rather well working hierarchic system is obtained by marking as "block-pages" all found page numbers divisible by hundred, and by marking as "group-pages" those pages found having page numbers divisible by ten and preceded by pages not included in the text service.

If the time code is anything else than 00.00 or 3F.7F, it is presumable that the page in question is a so called multiple page. This information can also be marked in the table, whereby the text decoder automatically can store sequential sub-pages when it is looking for such a page.

The decoder can also for the multiple pages generate a table of its own, in which always the highest page number of the received sub-page number is stored for the page in question. It is also possible to write in the table a message or the value "text pages" according to the "subtitle-bit", and when such a page is selected it is possible at once to display the television picture, already before the page is received.

In the device according to the invention the user for each program further can store teletext pages, so called favorite pages, which the text decoder receives and automatically stores after a program change. The decoder generates a list of topics, as in the Top-system, but by searching the "topic texts" from the favorite pages, for which the user has selected suitable pages of contents.

In Finland the channels TV1...TV3 all have the same teletext service. Then it would be unnecessary to abandon those pages already received and the tables already generated. A device according to the invention stores in its memory the "row 0 packet" message and compares it with the "row 0 packet" message of the new text service, when programs are changed. If the messages have a difference concerning the page number and the time only, then it is assumed that they represent the same text service, and the stored pages and tables are immediately taken into use.

Because pages are periodically added to and deleted from the transmission cycle this own TOP-table must also be updated. In order to have a ready table available also during updating, it is possible to reserve for the tables two page memories which are used alternatively.

The only new requirement on the text decoder is that it must be able to examine the "row 0 packet" messages. This is not efficiently implemented in all present circuits, because there was no corresponding need for it. The last eight characters of the "Header packet" message are used to display the time of the day, so this part of the "row 0 packet" message reception exists in all circuits. It will be easy to realize the invention in text decoders of the next generation having a micro-controller of their own, because then it will be possible to avoid the use of the slow serial bus.

The device according to the invention brings all advantages of TOP-text to the text transmissions. The greatest benefits will be experienced in countries which don't use the Fastext-system nor the Top-system. This method can test the validity of the page 1F0 of the Top-system, and if required, make corrections to the table of 1F0.

Page scanning will now be meaningful, as there is no need to wait for a page not contained in the transmission, but the transmitted page is directly displayed.

Because text decoders typically contain less parallel page search circuits than the memory has capacity to store pages, the tables in question do not decrease the performance.

With the aid of a table it is possible to increase the efficiency of the parallel search circuits in the decoder in those instances when it is not possible to separately define the storage address for each search circuit: Because only pages contained in the transmission are searched, they can all be received during the transmission cycle, and thus it is possible within a short time to move over to search the next page group.

## Claims

1. A device for rapid identification of teletext pages, the device comprising a text decoder and a memory, **characterized** in that one of the page memories is reserved for a table, in which the decoder marks pages included in the teletext service in question.

2. Device according to claim 1, **characterized** in that the device first initializes all elements in the table with the value "page not in transmission".

3. Device according to claim 1 or 2, **characterized** in that the device searches "row 0 packet" messages which it receives, and when the device finds a new "Header packet" message it marks the respective page in the table with the value "standard page".

4. Device according to claim 1, 2 or 3, **characterized** in that the device for the multiple pages can generate a parallel table of its own, in which always the highest page number of the received sub-page number is stored for the page in question.

5. Device according to claim 1 or 3, **characterized** in that the message "text pages" can be marked in the table in accordance with the "subtitle-bit".

6. Device according to claim 1, 3 or 5, **characterized** in that the user can form a hierarchic system by marking as "block-pages" all found page numbers divisible by hundred, and by marking as "group-pages" e.g. those pages found having page numbers divisible by ten and preceded by pages not included in the text service.

7. Device according to claim 1, 3, 5 or 6, **characterized** in that the user for each program can store favorite pages, which the text decoder receives, stores and utilizes to automatically generate a "list of topics" after a program change.

8. Device according to any preceding claim, **characterized** in that two page memories are reserved for the tables which are used alternatively.

9. Device according to any preceding claim, **characterized** in that the device stores in its memory the "row 0 packet" message, compares it with the "row 0 packet" message of the new text service, when programs are changed, and if the messages have a difference concerning the page number and the time only, then the stored pages and tables are immediately taken into use.
